# EUROPÄISCHE PATENTSCHRIFT

(11) **EP 1 701 593 B1**
(45) Veröffentlichungstag und Bekanntmachung des Hinweises auf die Patenterteilung: **10.03.2010**
(21) Anmeldenummer: 05027712.8
(22) Anmeldetag: 19.12.2005
(51) Int. Cl.: H05B 37/02, H05B 33/08

(54) **Verfahren zur gepulsten Ansteuerung von Leuchtmitteln**
Method for driving light sources by pulse width modulation
Methode pour alimenter des sources lumineuses par modulation de largeur d' impulsions.

(30) Priorität: 12.03.2005 DE 102005011503
(43) Veröffentlichungstag der Anmeldung: 13.09.2006
(73) Patentinhaber: Insta Elektro GmbH, 58511 Lüdenscheid (DE)
(72) Erfinder: Nockemann, Frank, Dipl.-Ing., 58511 Lüdenscheid (DE); Grossen, Thomas, Dipl.-Ing., 58239 Schwerte (DE); Grosch, Volker, Dipl.-Ing., 45549 Sprockhövel-Herzkamp (DE); Schubert, Frank, 58791 Werdohl (DE)

(56) Entgegenhaltungen:
- JP-A- 55 061 116
- ANONYMOUS: "An overview of the electronic drive techniques for intensity control and colour mixing of low voltage light sources such as LEDs and LEPs." INTERNET ARTICLE, [Online] Mai 2002 (2002-05), XP002518640 Gefunden im Internet: URL:http://www.artisticlicence.com/WebSite Master/App%20Notes/appnote011.pdf> [gefunden am 2009-03-11]

## Beschreibung

Die vorliegende Erfindung geht von einem gemäß Oberbegriff des Hauptanspruches konzipierten Verfahren zur gepulsten Ansteuerung von Leuchtmitteln aus.

Derartige Verfahren zur gepulsten Ansteuerung von Leuchtmitteln sind in der Regel dafür vorgesehen, auf komfortable Art und Weise verschiedene Helligkeiten und/oder Farbgebungen von Leuchtmitteln je nach Bedarf einstellen zu können. Zu diesem Zweck sind verschiedene Ansteuerverfahren für Leuchtmittel bekannt geworden. Ein gängiges Verfahren zur gepulsten Ansteuerung von Leuchtmitteln ist die sogenannte Pulsweitenmodulation (PWM). In vielen Fällen wird diese bereits von der Peripherie auch einfacher Mikrocontroller unterstützt. Dies ist jedoch nur bis zu einer kleinen Anzahl von PWM-Kanälen (2 Kanäle) möglich. Werden mehr als zwei PWM-Kanäle zur gepulsten Ansteuerung von Leuchtmitteln benötigt, muss deshalb auf aufwendigere Mikrocontroller oder auf eine softwaregesteuerte Pulsweitenmodulation zurückgegriffen werden. Pulsweitenmodulation durch Software verlangt eine hohe Rechenleistung, da die Berechnung mit sehr hoher Frequenz durchlaufen werden muss, nämlich mit der gewünschten PWM-Frequenz multipliziert mit der Auflösung. Ein solches Verfahren zur gepulsten Ansteuerung von Leuchtmitteln ist z. B. durch die DE 196 02 891 A1 bekannt geworden.

Eine deutliche Entlastung des Prozessors bei softwaregesteuerter Pulsung kann durch den Einsatz der sogenannten Bitangle-Modulation erreicht werden. Dieses Verfahren zeichnet sich gegenüber der Pulsweitenmodulation dadurch aus, dass pro Periode nicht zwingend ein zusammenhängender Puls variabler Länge erzeugt wird, sondern jede Periode aus mehreren Zeitblöcken besteht, deren Länge sich zueinander exponentiell verhält. Im Allgemeinen verdoppelt bzw. halbiert sich die Zeitdauer der Zeitblöcke von einem zum nächsten Zeitblock und entspricht so der Wertigkeit der Bits eines binär codierten Tastverhältnisses. Je nach Zustand des Bits im Tastverhältnis wird während dieses Zeitblocks das Leuchtmittel ein- oder ausgeschaltet. Ein solches Verfahren bildet den Oberbegriff des Hauptanspruches und ist durch die Veröffentlichung "An overview of the electronic drive techniques for intensity control and colour mixing of low voltage light sources such as LEDs and LEPs" der Firma Artistic Licence vom Mai 2002 bekannt geworden. In der Praxis zeigt sich jedoch bei der Anwendung der Bitangle-Modulation im Übergang zwischen geringfügig verschiedenen Helligkeiten eine für das menschliche Auge deutlich abweichende Helligkeit, was wiederum als Blitzen oder als Dunkelphase empfunden wird. Bei den heutigen Komfortansprüchen an solche Helligkeitssteuerungen sind solche Erscheinungen jedoch nicht tolerabel.

Der vorliegenden Erfindung liegt deshalb die Aufgabe zugrunde, ein Verfahren zur gepulsten Ansteuerung von Leuchtmitteln zu schaffen, bei dem einerseits nur eine minimale Rechenleistung zur bedarfsgerechten Ansteuerung der Leuchtmittel ausreicht und bei dem gleichzeitig andererseits besonders hohe Ansprüche bezüglich gleichmäßiger Übergänge zwischen verschiedenen Helligkeiten zufriedengestellt werden.

Erfindungsgemäß wird diese Aufgabe durch die im Hauptanspruch angegebenen Merkmale gelöst.

Bei einer solchen Ausbildung ist besonders vorteilhaft, dass bei geringer Rechenleistung auch besonders schnell ansprechende LEDs bedarfsgerecht angesteuert werden können.

Weitere vorteilhafte Ausgestaltungen des erfindungsgemäßen Gegenstandes sind in den Unteransprüchen angegeben. Anhand zweier Diagramme sei die Erfindung im Prinzip näher erläutert. Dabei zeigen:
- Fig. 1:: ein Beispiel einer Helligkeitssteuerung eines Leuchtmittels bei 4 Bit Auflösung und Anwendung des Verfahrens nach Bitangle-Modulation gemäß Stand der Technik;
- Fig. 2:: ein und das selbe Beispiel einer Helligkeitssteuerung eines Leuchtmittels, wie gemäß Fig. 1, jedoch bei Anwendung des Verfahrens nach Bitangle-Modulation, wobei jedoch jeder Zeitblock zweimal symmetrisch um die Mitte jeder Periode angeordnet ist.

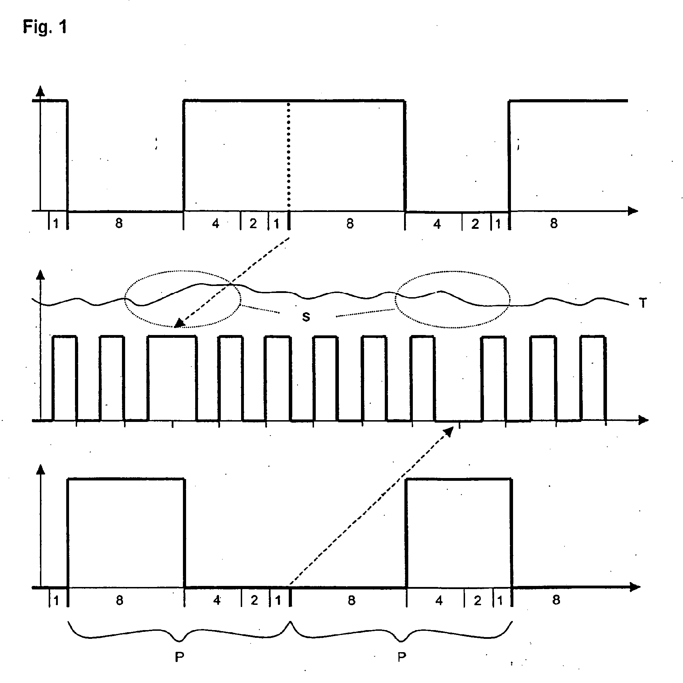

Wie aus Figur 1 hervorgeht, zeichnet sich das Verfahren gemäß Bitangle-Modulation nach dem Stand der Technik dadurch aus, dass jede Periode P mehrere zeitlich fest angeordnete Zeitblöcke aufweist, deren Länge sich zueinander exponentiell verhält. Dabei halbiert sich die Zeitdauer der Zeitblöcke von einem zum nächsten Zeitblock und entspricht so der Wertigkeit der Bits eines binär codierten Tastverhältnisses. Je nach Zustand des Bits im Tastverhältnis wird während dieses Zeitblocks das Leuchtmittel ein- oder ausgeschaltet. Nur aus Gründen der einfacheren Darstellung wurde eine Periode P mit einer Auflösung von 4 Bit gewählt. Bei einer Auflösung von 8 Bit (nicht dargestellt) zerfällt eine Periode P beim Verfahren gemäß Bitangle-Modulation gegenüber der Verwendung des Verfahrens gemäß Pulsweitenmodulation nicht mehr in 255 Zeitblöcke gleicher Länge, sondern nur noch in 8 Zeitblöcke unterschiedlicher Länge. Der kürzeste Zeitblock beim Verfahren gemäß Bitangle-Modulation entspricht bei gleicher Frequenz der Länge eines Zeitblockes gemäß Pulsweitenmodulation, der längste Zeitblock weist die 128-fache Länge des kürzesten Zeitblockes auf. Bei einer 8 Bit Auflösung wird somit innerhalb einer Periode P im Höchstfalle nur vier mal ein- und ausgeschaltet bzw. acht mal geschaltet. Offensichtlicher Vorteil der Bitangle-Modulation gegenüber der Pulsweitenmodulation ist also, dass der Mikroprozessor die Berechnungsroutine rund 32 mal seltener aufrufen muss, also erheblich entlastet wird. Für das menschliche Auge ist bedingt durch seine Trägheit ein Unterschied zwischen einer Helligkeitsregelung mittels Pulsweitenmodulation und einer Helligkeitsregelung mittels Bitangle-Modulation auch bei sehr schnell ansprechenden Leuchtmitteln, wie z. B. LEDs nicht wahrnehmbar.

Wie des Weiteren aus der Figur 1 hervorgeht, zeigt sich in der Praxis jedoch, dass bei Anwendung der Bitangle-Modulation nach dem Stand der Technik im Übergang zwischen geringfügig verschiedenen Helligkeiten eine für das Empfinden des menschlichen Auge deutlich abweichende Helligkeit auftritt, was vom Betrachter oft als Blitzen oder ausgeprägte Dunkelphase empfunden wird. Ein solches Verhalten tritt bei der Verwendung der Pulsweitenmodulation als Ansteuerverfahren nicht auf.

Grund für die vom menschlichen Auge empfundenen Blitz- bzw. Dunkelphasenerscheinungen ist, dass bei bestimmten Tastverhältnissen ein ungünstiges Zusammenfallen der ein- bzw. auszuschaltenden Zeitblöcke auftritt. Dies ist in Figur 1 zum Beispiel beim Übergang von Dimmstufe 7 nach Dimmstufe 8 bei einer Auflösung von 4 Bit näher dargestellt. Binär codiert ist die Dimmstufe 7 = ,0111' und die Dimmstufe 8 = '1000'. Beide Tastverhältnisse bzw. Dimmstufen weichen in diesem Fall nur um ca. 6,7% voneinander ab und sind daher statisch vom menschlichen Auge kaum voneinander zu unterscheiden. Wie des Weiteren aus Figur 1 ersichtlich ist, entsteht beim Übergang von Dimmstufe 7 nach Dimmstufe 8 und zurück jeweils eine zusammenhängende Ein- bzw. Aus-Phase, deren Länge einer gesamten Periode P entspricht. Über eine dem menschlichen Auge entsprechende Tiefpassfunktion T wird ersichtlich, dass beide Extreme deutlich aus dem ansonsten gleichmäßigen Verlauf hervorstechen. Die Ausgangsgröße dieser Tiefpassfunktion T ist im mittleren Zeitschaubild der Figur 1 qualitativ eingezeichnet. Praktische Versuche zeigen, dass diese Über- bzw. Unterschwinger auch vom menschlichen Auge deutlich als Störungen S wahrgenommen werden, während die beiden Dimmstufen 7, 8 sich in ihrer statischen Intensität kaum sichtbar unterscheiden.

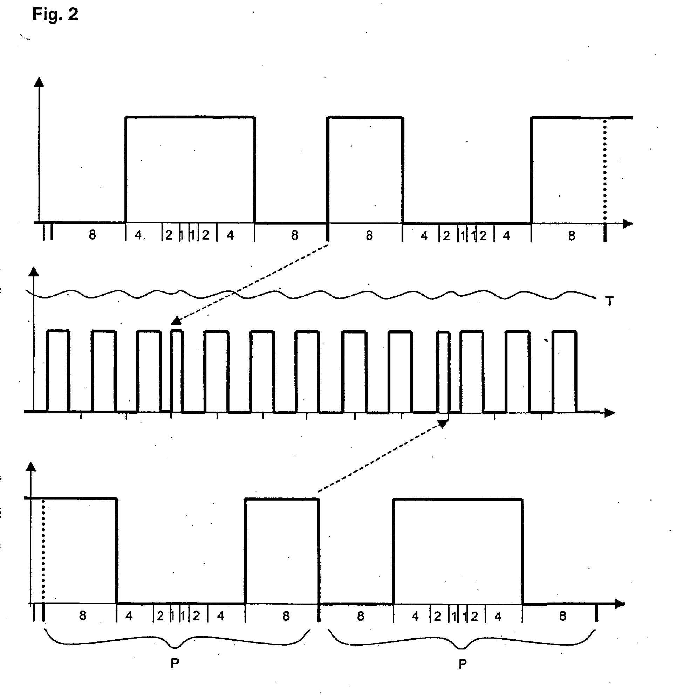

Um die vorbeschriebenen Störeffekte zu vermeiden, sind, wie aus Figur 2 hervorgeht, die im Übergang zwischen verschiedenen Dimmstufen zusammenfallenden Zeitblöcke der Bitangle-Modulation entzerrt angeordnet, so dass diese keine zusammenhängenden Abschnitte bilden, die länger sind als beim statischen Betrieb mit ausreichend hoher Frequenz zwecks flackerfreiem Betrieb. Wie des Weiteren aus Figur 2 hervorgeht, wird eine Periode P der Bitangle-Modulation erst nochmals zeitlich gespiegelt abgespielt, bevor die nächste Periode P mit eventuell neuer Pulsbreite begonnen wird. Die Spiegelung erfolgt dabei derart, so dass der kürzeste Zeitblock, also der mit der geringsten Wertigkeit in der Mitte zu liegen kommt, da der Mikroprozessor in diesem Augenblick die höchste Rechenleistung zu erbringen hat. Eine erneute Prüfung auf Ein- oder Ausschalten kann bei der Wiederholung des kürzesten Zeitblocks somit entfallen und die beiden Zeitblöcke in einem Zug abgespielt werden. Umgekehrt steht für die Übernahme eines neuen Tastverhältnisses bzw. einer neuen Dimmstufe in den Rechenalgorithmus bei dieser Anordnung die maximale Rechenzeit zur Verfügung, da dies zwischen die Zeitblöcke mit maximaler Länge fällt.

Bei Beibehaltung der Frequenz halbieren sich durch die Spiegelung der Pulsfolgen zwar die Längen der einzelnen Zeitblöcke, was die gesamte Prozessorbelastung in etwa verdoppelt, da die maximale Belastung des Mikroprozessors aber im Augenblick des kürzesten Zeitblocks auftritt, erhöht sich durch das Zusammenfallen der beiden kürzesten Zeitblöcke die maximale und damit kritische Prozessorbelastung nicht gegenüber dem Betrieb mit einfacher Bitangle-Modulation nach dem Stand der Technik bei gleicher Frequenz. Eine erhebliche Entlastung des Mikroprozessors im Hinblick auf die Verwendung eines pulsweitenmodulierten Ansteuerungsverfahrens ist jedoch weiterhin gegeben.

Bei Tastverhältnissen bzw. Dimmstufen mit hoher Schalthäufigkeit von z.B. 170/255 (binär 10101010 bei 8 Bit, jedoch nicht dargestellt) verdoppelt sich bei symmetrischer Bitangle-Modulation mit gleicher Frequenz gegenüber einfacher Bitangle-Modulation etwa die Anzahl der Schaltvorgänge je Zeiteinheit. Wie aus Figur 2, insbesondere mittleres Schaubild ersichtlich ist, bleibt jedoch in den zuvor genannten Fällen für die Dimmstufen 7 und 8 die Anzahl der Schaltvorgänge pro Zeiteinheit erhalten, da die gespiegelten Zeitblöcke direkt aneinander angrenzen. Die Anzahl der Schaltvorgänge erhöht sich nur im Augenblick der Übergänge und damit bedarfsgerecht für die Anwendung bei schnellen Leuchtmitteln, wie z. B. LEDs. Dies ist der Grund, weshalb Über- oder Unterschwinger des Tiefpass-Empfindens bzw. Störungen für das Empfinden des menschlichen Auges - wie bei Bitangle-Modulation nach dem Stand der Technik - nicht auftreten.

## Patentansprüche

1. Verfahren zur gepulsten Ansteuerung von Leuchtmitteln, bei dem eine Periode in mehrere zeitlich fest innerhalb der Periode angeordnete Zeitblöcke unterschiedlicher Dauer zerlegt ist, in denen die Leuchtmittel je nach Zustand des in seiner Wertigkeit zugehörigen Bits des gewünschten Tastverhältnisses ein- oder ausgeschaltet werden, **dadurch gekennzeichnet, dass** jeder Zeitblock zumindest zweimal innerhalb jeder Periode (P) angeordnet ist, und dass nicht alle gleichwertigen Zeitblöcke innerhalb einer einzigen Periode (P) unmittelbar aneinandergrenzend angeordnet sind, und dass jeder Zeitblock zweimal symmetrisch um die Mitte innerhalb einer jeden Periode (P) angeordnet ist, und dass die Zeitdauer der Zeitblöcke vom Periodenbeginn zur Periodenmitte stetig abnimmt und von der Periodenmitte zum Periodenende stetig zunimmt.

2. Verfahren zur gepulsten Ansteuerung von Leuchtmitteln nach einem der Ansprüche 1 bis 2, **dadurch gekennzeichnet, dass** die Auflösung einer Periode (P) mit acht Bit erfolgt.

## Claims

1. Process for the pulse-controlled actuation of illuminants in which a period is split up into multiple time blocks of various lengths that are arranged in a fixed temporal order within the period and in which the illuminants are switched on or off in dependence on the state of the bit of the required pulse duty factor corresponding to its pulse value, **characterised in that** each time block is arranged at least twice within each period (P) and that the equivalent time blocks within a single period (P) are not all arranged directly adjacent to each other, and that each time block is arranged twice symmetrically around the middle within each period (P), and that the duration of the time blocks constantly decreases from the beginning of the period to the middle of the period and constantly increases from the middle of the period to the end of the period.

2. Process for the pulse-controlled actuation of illuminants according to Claim 1, **characterised in that** the resolution of a period (P) is effected with eight bits.

## Revendications

1. Procédé pour la commande d'amorçage par impulsions de lampes selon lequel une période est divisée en plusieurs blocs temporels de différentes durées disposés de façon temporellement fixe à l'intérieur de la période, les lampes étant allumées ou éteintes dans les limites de ces blocs selon l'état du bit correspondant par sa valeur et par le facteur d'utilisation ; le procédé est **caractérisé par le fait que** chaque bloc temporel est placé au moins deux fois à l'intérieur de chaque période (P), que les blocs temporels équivalents ne sont pas tous placés à proximité immédiate les uns des autres à l'intérieur d'une même période (P), que chaque bloc temporel est placé deux fois symétriquement par rapport au milieu à l'intérieur de chaque période (P) et que la durée des blocs temporels diminue constamment du début de la période au milieu de la période et augmente constamment du milieu de la période à la fin de la période.

2. Procédé pour la commande d'amorçage par impulsions de lampes selon la revendication 1, **caractérisé par le fait que** la résolution d'une période (P) est définie par 8 bits.
